# EUROPÄISCHE PATENTSCHRIFT

(11) **EP 1 877 675 B1**
(45) Veröffentlichungstag und Bekanntmachung des Hinweises auf die Patenterteilung: **10.09.2008**
(21) Anmeldenummer: 06754855.2
(22) Anmeldetag: 26.04.2006
(51) Int. Cl.: F16D 48/08

(54) **VERFAHREN UND VORRICHTUNG ZUM ERKENNEN EINES KUPPLUNGSSCHLEIFPUNKTES**
METHOD AND DEVICE FOR RECOGNIZING A CLUTCH SLIPPING POINT
PROCEDE ET DISPOSITIF D'IDENTIFICATION D'UN POINT DE FROTTEMENT D'UN EMBRAYAGE

(30) Priorität: 27.04.2005 DE 102005019989; 05.04.2006 DE 102006015896
(43) Veröffentlichungstag der Anmeldung: 16.01.2008
(73) Patentinhaber: Continental Teves AG & Co. oHG, 60488 Frankfurt am Main (DE)
(72) Erfinder: KULBE, Roland, 04827 Greichshain (DE); KLUSEMANN, Rainer, 60529 Frankfurt am Main (DE); HINN, Mirco, 60320 Frankfurt am Main (DE); PAGEL, Klaus Dieter, 64293 Darmstadt (DE)
(86) Internationale Anmeldenummer: PCT/EP2006/061832
(87) Internationale Veröffentlichungsnummer: WO 2006/114423

(56) Entgegenhaltungen:
- EP-A- 1 393 952
- EP-A- 1 393 954
- DE-A1-2102005 011 03
- US-A1- 2003 220 171

## Beschreibung

Die vorliegende Erfindung betrifft ein Verfahren zum Erkennen eines Kupplungsschleifpunktes einer mit einem Antriebsmotor verbundenen Kupplung, bei dem die Drehzahl des Antriebsmotors sowie Raddrehzahlwerte der vom Antriebsmotor angetriebenen Räder ermittelt werden. Außerdem betrifft die Erfindung eine Vorrichtung zur Durchführung des Verfahrens.

Der exakte Kupplungsschleifpunkt wird beispielsweise als Lösekriterium für einen automatischen Lösevorgang einer elektrischen Parkbremse in einem Kraftfahrzeug benötigt. Es stellt sich jedoch das Problem, dass jede Kupplung einem Verschleiß unterliegt, der die Lage des Schleifpunkts verändert.

Aus der DE 10 2005 011 032 A1 ist ein Verfahren zum Erkennen des Zeitpunkts eines Einkuppelns einer mit einem Antriebsmotor verbundenen Kupplung bekannt, bei dem überprüft wird, ob ein von einem Antriebsmotor bereitgestelltes Drehmoment in einem vorgegebenem Bereich liegt und bei dem dann ein Einkuppeln festgestellt wird, wenn eine Änderungsrate der Drehzahl einen vorgegebenen ersten Schwellenwert unterschreitet. Bei dem vorbekannten Verfahren wird das vom Antriebsmotor bereitgestellte Drehmoment als Eingangsgröße benötigt, das für jeden Verbrennungsmotor unterschiedlich ist. Das vom Antriebsmotor bereitgestellte Drehmoment wird nicht direkt gemessen, sondern aus Einspritzmenge, Motordrehzahl, Luftmenge usw. berechnet. Daher ist es nicht immer in hinreichender Qualität, wie beispielsweise nach einem Kaltstart des Verbrennungsmotors, vorhanden.

US 2003/0220171 offenbart ein Verfahren mit den Merkmalen des Oberbegriffen des Anspruchs 1.

Es ist daher Aufgabe der vorliegenden Erfindung ein Verfahren derart zu verbessern, dass der Kupplungsschleifpunkt zuverlässig mit einer höheren Genauigkeit ermittelt wird.

Diese Aufgabe wird verfahrensmäßig dadurch gelöst, dass ein Übersetzungsverhältnis ermittelt wird, das aus einem Quotienten der Raddrehzahlwerte und der Drehzahl des Antriebsmotors gebildet wird, und dass der Kupplungsschleifpunkt festgestellt wird, wenn das Übersetzungsverhältnis und die Drehzahl des Antriebsmotors ein lokales Minimum aufweisen. Die benötigte Drehzahl des Antriebsmotors und die Raddrehzahlwerte stehen mit einer höheren Genauigkeit zur Verfügung als der Wert für das Drehmoment des Antriebsmotors, da sie direkt mit Sensoren erfasst werden. Der Applikationsaufwand ist für verschiedene Verbrennungsmotoren erheblich geringer, da das erfindungsgemäße Verfahren auf das für jeden Verbrennungsmotor unterschiedliche Drehmoment verzichtet.

Dabei ist vorgesehen, dass ein Kupplungspedalwegsensor die Stellung eines Kupplungspedals erfasst und dass die Stellung des Kupplungspedals am Kupplungsschleifpunkt gespeichert wird.

Eine besonders vorteilhafte Weiterbildung sieht vor, dass die Stellung des Fahrpedals erfasst wird und dass die Erkennung des Kupplungsschleifpunktes ausschließlich bei unbetätigtem Fahrpedal durchgeführt wird.

Dabei wird die Ermittlung der Raddrehzahlwerte mit Hilfe von Raddrehzahlsensoren und die Ermittlung der Fahrpedalstellung mit Hilfe eines Fahrpedalwegsensors durchgeführt.

Bei einer besonders vorteilhaften Weiterbildung des erfindungsgemäßen Verfahrens ist vorgesehen, dass die dem Kupplungsschleifpunkt entsprechende Stellung des Kupplungspedals als Kriterium zum automatischen Lösen einer elektrischen Feststellbremse in einem Kraftfahrzeug verwendet wird.

Die Aufgabe wird außerdem dadurch gelöst, dass Mittel vorgesehen sind, die ein Übersetzungsverhältnis, das aus einem Quotienten der Raddrehzahlwerte und der Drehzahl des Antriebsmotors gebildet wird, ermitteln und den Kupplungsschleifpunkt erkennen, wenn das Übersetzungsverhältnis und die Drehzahl des Antriebsmotors ein lokales Minimum aufweisen.

Dabei ist vorgesehen, dass ein Kupplungspedalwegsensor zur Ermittlung der Kupplungspedalstellung, Raddrehzahlsensoren zur Ermittlung der Raddrehzahlwerte und ein Fahrpedalwegsensor zur Ermittlung der Fahrpedalstellung vorgesehen ist.

Die Erfindung wird nachfolgend anhand eines Ausführungsbeispiels im Zusammenhang mit der beiliegenden Zeichnung näher erläutert. In der Zeichnung zeigen:
- Fig. 1: ein schematisch dargestelltes Schaltbild eines hydraulischen Bremssystems, das eine elektromechanische Einheit zur Durchführung von Feststellbremsvorgängen aufweist und an der das erfindungsgemäße Verfahren durchführbar ist;
- Fig. 2: ein graphisch dargestellter Vergleich zwischen den Signalen eines Fahrpedalwegsensors, den Signalen eines Kupplungspedalwegsensors, einem Übersetzungsverhältnis, einer Drehzahl des Antriebsmotors, einem Drehmoment des Antriebsmotors und Raddrehzahlwerten während der Fahrt eines Kraftfahrzeugs.

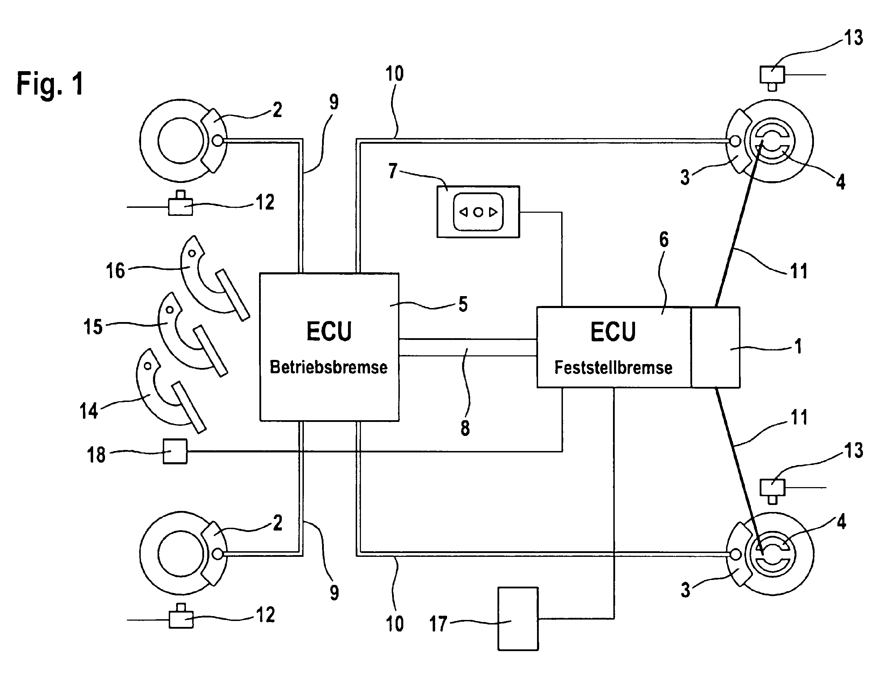

In Fig. 1 ist ein Schaltbild einer hydraulischen Bremsanlage schematisch dargestellt. Die hydraulische Bremsanlage weist an einer ersten Achse, der Vorderachse, Radbremsen 2 auf, die während Betriebsbremsungen über eine hydraulische Leitung 9 mit Druck beaufschlagbar sind. Zur Kontrolle der gewünschten Bremsverzögerung und zur Realisierung einer Blockierschutz-Regelung (Antilock) sowie zur Detektierung der Fahrzeuggeschwindigkeit sind den Rädern der Vorderachse Raddrehzahlsensoren 12 zugeordnet, deren Ausgangssignale einer elektronischen Steuer- und Regeleinheit (ECU) 5 zugeführt werden. Diese elektronische Steuer- und Regeleinheit 5 ist dem Betriebsbremssystem zugeordnet. An einer zweiten Achse, der Hinterachse, sind ebenfalls Radbremsen 3 vorgesehen, die während Betriebsbremsungen über eine zweite hydraulische Leitung 10 mit Druck beaufschlagbar sind. Die Raddrehzahlen der Räder der Hinterachse werden durch Raddrehzahlsensoren 13 ermittelt und der eben erwähnten elektronischen Steuer-und Regeleinheit 5 zugeführt. Außerdem weisen die Räder der Hinterachse neben den Radbremsen 3 für Betriebsbremsungen auch eine elektromechanisch betätigbare Feststellbremse auf. Die elektromechanisch betätigbare Feststellbremse umfasst zwei verriegelbare Bremseinrichtungen 4, die als Trommelbremsen 4 mit jeweils einem nicht näher dargestellten Spreizschloss ausgebildet sind. Das eben genannte Spreizschloss ist mittels eines Kabelzugs 11 von einer elektromechanischen Stelleinheit 1 betätigbar, wonach die Trommelbremsen 4 zugespannt werden. Ein Feststellbremsvorgang wird nach der Betätigung eines Bedienelementes 7 durch den Fahrzeugführer durchgeführt. Dabei werden die Ausgangssignale des Bedienelementes 7 einer der elektromechanischen Feststellbremse zugeordneten elektronischen Steuereinheit (ECU) 6 zugeführt, die die bereits erwähnte elektromechanische Stelleinheit 1 entsprechend ansteuert. Die eben genannte elektronische Steuereinheit 6 sowie die dem Betriebsbremssystem zugeordnete elektronische Steuer- und Regeleinheit 5 kommunizieren miteinander über eine Datenleitung 8, die beispielsweise als CAN-Verbindung ausgebildet sein kann.

In Fig. 1 sind zusätzlich schematisch ein Kupplungspedal 14, ein Betriebsbremspedal 15 und ein Fahrpedal 16 sowie ein den Kupplungspedalweg ermittelnden Kupplungspedalwegsensor 18 dargestellt. Der Zweck der genannten Sensoren wird später näher erläutert.

Wie einleitend bereits erwähnt, wird der exakte Kupplungsschleifpunkt als Lösekriterium für einen automatischen Lösevorgang der elektromechanisch betätigbaren Feststellbremse benötigt. Nach Erkennung eines Anfahrvorganges des Kraftfahrzeugs steuert die der Feststellbremse zugeordnete Steuereinheit 6 die Stelleinheit 1 im Sinne eines Lösevorgangs der Feststellbremse an. Zur Erkennung eines Anfahrvorganges wird zunächst überprüft, ob die Zündung des Kraftfahrzeugs aktiviert ist. Falls dies der Fall ist wird angenommen, dass das Kraftfahrzeug in Bewegung gesetzt werden soll. Zu diesem Zweck wird zusätzlich geprüft, ob sich der Antriebsmotor im Betriebsmodus befindet. Durch die Auswertung der Signale des Kupplungspedalwegsensors 18 wird ermittelt, ob der Fahrzeugführer das Kupplungspedal getreten hat. Sofern der Fahrzeugführer das Kupplungspedal 14 aus der eben erwähnten, getretenen Position löst, ist ein Anfahrvorgang des Kraftfahrzeugs erkannt und die anhand von Fig. 1 erwähnte Steuereinheit 6 steuert die Stelleinheit 1 im Sinne eines Lösevorganges der Feststellbremse an. Da jede Kupplung einem Verschleiß unterliegt, verändert sich die Lage des Kupplungsschleifpunkts.

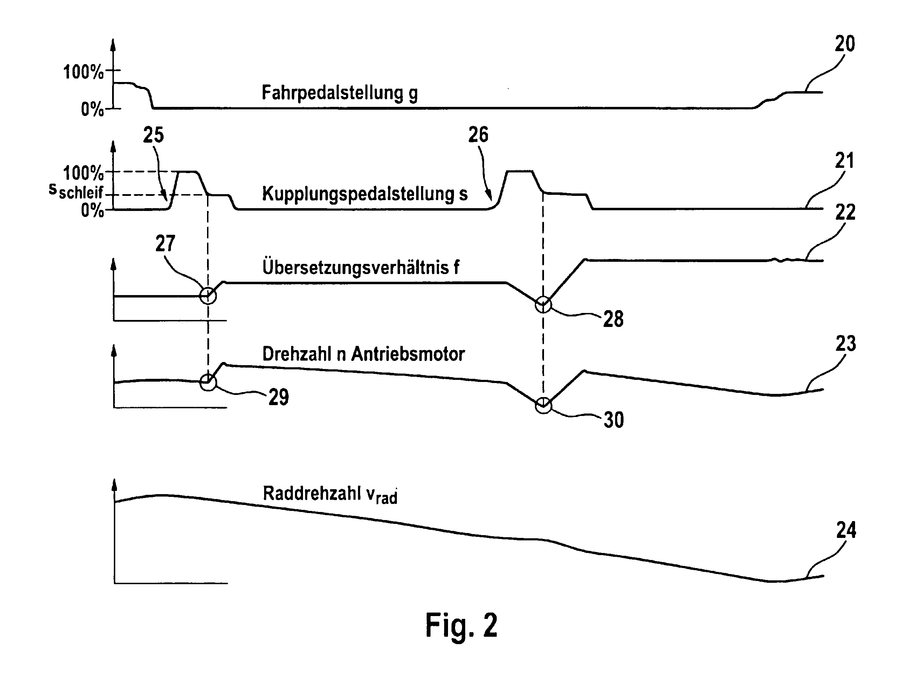

Das erfindungsgemäße Verfahren zum Erkennen des Kupplungsschleifpunktes wird anhand von Fig. 2 nachfolgend näher erläutert. In Fig. 2 ist der zeitliche Verlauf einiger Messgrößen beim Herunterschalten des manuellen Getriebes dargestellt. Der in Fig. 2 ganz oben dargestellte, zeitliche Verlauf stellt die Stellung g des Fahrpedals 16 dar und ist mit dem Bezugszeichen 20 versehen. Die Fahrpedalstellung g kann Werte zwischen 0% und 100% annehmen. Wie der Verlauf 20 darstellt, wird das Fahrpedal 16 während der Erkennung des Kupplungsschleifpunktes nicht betätigt, da nur Schaltvorgänge ausgewertet werden können, bei denen der Fahrzeugführer am Kupplungsschleifpunkt kein Gas gibt.

Der mit dem Bezugszeichen 21 versehene, zeitliche Verlauf stellt die Stellung des Kupplungspedals 14 dar. Die Kupplungspedalstellung s kann ebenfalls Werte zwischen 0% und 100% annehmen, wobei die Stellung s_{schleif} des Kupplungspedals 14 am Kupplungsschleifpunkt gespeichert wird.

Zur Erkennung des Kupplungsschleifpunktes wird ein Übersetzungsverhältnis f ermittelt, das aus einem Quotienten der Raddrehzahlwerte v_{rad} und der Drehzahl n des Antriebsmotors gebildet wird und in Fig. 2 mit dem Bezugszeichen 22 versehen ist. Der Verlauf der eben erwähnten Drehzahl n des Antriebsmotors ist mit dem Bezugszeichen 23 versehen und der Verlauf der Raddrehzahlwerte v_{rad} mit dem Bezugszeichen 24. Anhand des Verlaufs 24 ist zu erkennen, dass die Raddrehzahlwerte v_{rad} abnehmen, das heißt, dass die Geschwindigkeit des Kraftfahrzeugs abnimmt. Im beschriebenen Ausführungsbeispiel wird die Erkennung des Kupplungsschleifpunktes während der Verzögerung des Kraftfahrzeuges beim Herunterschalten durchgeführt.

Bei einem Gangwechsel betätigt der Fahrzeugführer das Kupplungspedal, das heißt der Fahrzeugführer führt das Kupplungspedal 14 aus der unbetätigten Stellung in eine nahezu vollständig betätigte Stellung über, wie es bei den Positionen 25 und 26 dargestellt ist. Wird nach dem Gangwechsel beim Herunterschalten wieder eingekuppelt, so beschleunigt das von der Kupplung übertragene Moment den Antriebsmotor. Die Drehzahl n des Antriebsmotors und das Übersetzungsverhältnis f steigen, wie bei den Positionen 27 bis 30 verdeutlicht. Die Kupplungspedalstellung s_{schleif}, bei der die Drehzahl n bzw. Übersetzungsverhältnis f zu steigen beginnen, das heißt wenn das Übersetzungsverhältnis f und die Drehzahl n des Antriebsmotors ein lokales Minimum aufweisen, wird als Schleifpunkt gespeichert. Die Gesamtübersetzung stabilisiert sich nach dem Einkuppeln auf einem höheren Niveau als vor dem Schaltvorgang. Der Kupplungsschleifpunkt wird anhand des Ansteigens der Drehzahl n des Antriebsmotors beim Herunterschalten erkannt.

Die für das erfindungsgemäße Verfahren benötigten Werte Drehzahl n des Antriebsmotors und Raddrehzahlwerte v_{rad} stehen mit einer hohen Genauigkeit zur Verfügung, da sie direkt mit Sensoren erfasst werden. Dadurch ist die Erkennung des Kupplungsschleifpunktes ebenfalls präzise durchführbar. Der Applikationsaufwand des vorliegenden Verfahrens an verschiedene Kraftfahrzeugmodelle ist vergleichsweise gering.

Das erfindungsgemäße Verfahren muss nicht auf das Herunterschalten begrenzt sein. Wenn der Fahrzeugführer beim Hochschalten sehr lange auskuppelt pegelt sich der Antriebsmotor auf eine Leerlaufdrehzahl ein und wird beim Einkuppeln ohne Betätigung des Fahrpedals 16 beschleunigt. Auf diese Weise ist es möglich, den Vorgang weiter zu fassen.

## Patentansprüche

1. Verfahren zum Erkennen eines Kupplungsschleifpunktes einer mit einem Antriebsmotor verbundenen Kupplung, bei dem die Drehzahl (n) des Antriebsmotors sowie Raddrehzahlwerte (v_{rad}) der vom Antriebsmotor angetriebenen Räder ermittelt werden, wobei ein Übersetzungsverhältnis (f) ermittelt wird, das aus einem Quotienten der Raddrehzahlwerte (v_{rad}) und der Drehzahl (n) des Antriebsmotors gebildet wird, **dadurch gekennzeichnet, dass** der Kupplungsschleifpunkt festgestellt wird, wenn das Übersetzungsverhältnis (f) und die Drehzahl (n) des Antriebsmotors ein lokales Minimum aufweisen.

2. Verfahren nach Anspruch 1, **dadurch gekennzeichnet, dass** ein Kupplungspedalwegsensor (18) die Stellung eines Kupplungspedals (14) erfasst und dass die Stellung des Kupplungspedals (14) am Kupplungsschleifpunkt gespeichert wird.

3. Verfahren nach Anspruch 1, **dadurch gekennzeichnet, dass** die Stellung eines Fahrpedals (16) erfasst wird und dass die Erkennung des Kupplungsschleifpunktes ausschließlich bei unbetätigtem Fahrpedal (16) durchgeführt wird.

4. Verfahren nach einem der vorhergehenden Ansprüche, **dadurch gekennzeichnet, dass** die Ermittlung der Raddrehzahlwerte (v_{rad}) mit Hilfe von Raddrehzahlsensoren (12, 13) durchgeführt wird.

5. Verfahren nach Anspruch 3 oder 4, **dadurch gekennzeichnet, dass** die Ermittlung der Fahrpedalstellung mit Hilfe eines Fahrpedalwegsensor durchgeführt wird.

6. Verfahren nach einem der vorhergehenden Ansprüche, **dadurch gekennzeichnet, dass** die dem Kupplungsschleifpunkt entsprechende Stellung des Kupplungspedals (18) als Kriterium zum automatischen Lösen einer elektrischen Feststellbremse in einem Kraftfahrzeug verwendet wird.

7. Vorrichtung zum Erkennen eines Kupplungsschleifpunktes einer mit einem Antriebsmotor verbundenen Kupplung, mit Mitteln zur Ermittlung der Drehzahl (n) des Antriebsmotors sowie der Raddrehzahlwerte (v_{rad}) der vom Antriebsmotor angetriebenen Räder, wobei Mittel vorgesehen sind, die ein Übersetzungsverhältnis (f), das aus einem Quotienten der Raddrehzahlwerte (v_{rad}) und der Drehzahl (n) des Antriebsmotors gebildet wird, ermitteln **dadurch gekennzeichnet, dass** die Mittel den Kupplungsschleifpunkt erkennen, wenn das Übersetzungsverhältnis (f) und die Drehzahl (n) des Antriebsmotors ein lokales Minimum aufweisen.

8. Vorrichtung nach Anspruch 7, **dadurch gekennzeichnet, dass** ein Kupplungspedalwegsensor (18) zur Ermittlung der Kupplungspedalstellung, Raddrehzahlsensoren (12, 13) zur Ermittlung der Raddrehzahlwerte und ein Fahrpedalwegsensor zur Ermittlung der Fahrpedalstellung vorgesehen ist.

## Claims

1. Method for detecting a clutch bite-point of a clutch that is connected to a driving motor, wherein the rotational speed (n) of the driving motor and wheel rotational speed values (v_{wheel}) of the wheels driven by the driving motor are determined, wherein a transmission ratio (f) is determined, which is produced from a quotient of the wheel rotational speed values (v_{wheel}) and the rotational speed (n) of the driving motor,
**characterized in that** the clutch bite-point is established when the transmission ratio (f) and the rotational speed (n) of the driving motor have a local minimum.

2. Method as claimed in claim 1,
**characterized in that** a clutch pedal travel sensor (18) senses the position of a clutch pedal (14), and **in that** the position of the clutch pedal (14) at the clutch bite-point is saved.

3. Method as claimed in claim 1,
**characterized in that** the position of an accelerator pedal (16) is sensed, and **in that** the detection of the clutch bite-point is performed exclusively when the accelerator pedal (16) is not applied.

4. Method as claimed in any one of the preceding claims,
**characterized in that** the wheel rotational speed values (v_{wheel}) are determined by means of wheel rotational speed sensors (12, 13).

5. Method as claimed in claim 3 or 4,
**characterized in that** the accelerator pedal position is determined by means of an accelerator pedal travel sensor.

6. Method as claimed in any one of the preceding claims,
**characterized in that** the position of the clutch pedal (18), which corresponds to the clutch bite-point, is used as a criterion for the automatic release of an electric parking brake in a motor vehicle.

7. Device for detecting a clutch bite-point of a clutch that is connected to a driving motor, including a means for determining the rotational speed (n) of the driving motor and wheel rotational speed values (v_{wheel}) of the wheels driven by the driving motor, wherein a means is provided determining a transmission ratio (f), which is produced from a quotient of the wheel rotational speed values (v_{wheel}) and the rotational speed (n) of the driving motor,
**characterized in that** the means detect the clutch bite-point when the transmission ratio (f) and the rotational speed (n) of the driving motor have a local minimum.

8. Device as claimed in claim 7,
**characterized in that** there is provision of a clutch pedal travel sensor (18) for determining the clutch pedal position, wheel rotational speed sensors (12, 13) for determining the wheel rotational speed values, and an accelerator pedal travel sensor for determining the accelerator pedal position.

## Revendications

1. Procédé pour reconnaître un point de patinage d'embrayage d'un embrayage relié à un moteur d'entraînement, dans lequel la vitesse de rotation (n) du moteur d'entraînement ainsi que des valeurs de vitesse de rotation de roue (V_{rad}) des roues entraînées par le moteur d'entraînement sont déterminées, un rapport de transmission (f) étant déterminé qui est formé par un quotient des valeurs de vitesse de rotation de roue (V_{rad}) et de la vitesse de rotation (n) du moteur d'entraînement, **caractérisé en ce que** le point de patinage d'embrayage est constaté lorsque le rapport de transmission (f) et la vitesse de rotation (n) du moteur d'entraînement présentent un minimum local.

2. Procédé selon la revendication 1, **caractérisé en ce qu'**un capteur de course de pédale d'embrayage (18) détecte la position d'une pédale d'embrayage (14) et **en ce que** la position de la pédale au point de patinage d'embrayage (14) est mémorisée.

3. Procédé selon la revendication 1, **caractérisé en ce que** la position d'une pédale d'accélérateur (16) est détectée et **en ce que** la reconnaissance du point de patinage d'embrayage est exécutée exclusivement lorsque la pédale d'accélérateur (16) n'est pas actionnée.

4. Procédé selon l'une quelconque des revendications 1 à 3, **caractérisé en ce que** la détermination des valeurs de vitesse de rotation de roue (V_{rad}) est exécutée à l'aide de capteurs de vitesse de rotation de roue (12, 13).

5. Procédé selon l'une quelconque des revendications 3 ou 4, **caractérisé en ce que** la détermination de la pédale d'accélérateur est exécutée à l'aide d'un capteur de course de pédale d'accélérateur.

6. Procédé selon l'une quelconque des revendications 1 à 5, **caractérisé en ce que** la position de la pédale d'embrayage (18), correspondant au point de patinage d'embrayage, est utilisée comme critère pour le déclenchement automatique d'un frein de stationnement électrique d'un véhicule automobile.

7. Dispositif pour reconnaître un point de patinage d'embrayage d'un embrayage relié à un moteur d'entraînement, avec des moyens pour déterminer la vitesse de rotation (n) du moteur d'entraînement ainsi que les valeurs de vitesse de rotation de roue (V_{rad}) des roues entraînées par le moteur d'entraînement, des moyens étant prévus qui déterminent un rapport de transmission (f) qui est formé par un quotient des valeurs de vitesse de rotation de roue (V_{rad}) et de la vitesse de rotation (n) du moteur d'entraînement, **caractérisé en ce que** les moyens reconnaissent le point de patinage d'embrayage lorsque le rapport de transmission (f) et la vitesse de rotation (n) du moteur d'entraînement présentent un minimum local.

8. Dispositif selon la revendication 7, **caractérisé en ce qu'**il est prévu un capteur de course de pédale d'embrayage (18) pour déterminer la position de la pédale d'embrayage, des capteurs de vitesse de rotation de roue (12, 13) pour déterminer les valeurs de vitesse de rotation de roue et un capteur de course de pédale d'accélérateur pour déterminer la position de la pédale d'accélérateur.
